# EUROPÄISCHE PATENTANMELDUNG

(11) **EP 0 581 103 A1**
(43) Veröffentlichungstag der Anmeldung: **02.02.1994**
(21) Anmeldenummer: 93111155.3
(22) Anmeldetag: 13.07.1993
(51) Int. Cl.: A01B 73/04

(54) **Bodenbearbeitungsgerät**

(30) Priorität: 28.07.1992 DE 4224869
(71) Anmelder: GEBR. TIGGES GmbH & CO. KG, D-59302 Oelde (DE)
(72) Erfinder: Fenbers, Franz-Josef, D-59329 Wadersloh (DE); Kirchbeck, Hubert, D-59302 Oelde (DE); Auf der Landwehr, Willi, D-33397 Rietberg (DE)
(74) Vertreter: Patentanwälte Meinke, Dabringhaus und Partner

(57) **Zusammenfassung**

Ein Bodenbearbeitungsgerät mit einem Fahrgestell mit Rädern, mit zwei Auslegern, die aus einer Arbeitsstellung, in der sie seitlich vom Fahrgestell wegragen, in eine Transportstellung schwenkbar sind, wobei an jedem Ausleger wenigstens ein Bodenbearbeitungswerkzeug aufgehängt ist, das in Arbeitsstellung seitlich neben dem Fahrgestell auf dem Boden liegt und in Transportstellung wenigstens bereichsweise liegend auf dem Fahrgestell angeordnet ist, soll so verbessert werden, daß es in Transportstellung gute Fahreigenschaften aufweist und gleichzeitig in Arbeitsstellung eine einwandfreie Bodenbearbeitung ermöglicht.

Dies wird dadurch erreicht, daß die horizontale Schwenkachse (14,15) jedes Auslegers (8,9) schräg zur Fahrtrichtung (16) angeordnet ist, derart, daß die Drehachsen (22,23) der Werkzeuge (10,11) in Arbeitsstellung im wesentlichen auf einer gemeinsamen Geraden (24) liegen und in Transportstellung die Ausleger (8,9) etwa parallel nebeneinander auf dem Fahrgestell (2) angeordnet sind.

## Beschreibung

Die Erfindung betrifft ein Bodenbearbeitungsgerät mit einem Fahrgestell mit Rädern, mit zwei Auslegern, die aus einer Arbeitsstellung, in der sie seitlich vom Fahrgestell wegragen, in eine Transportstellung schwenkbar sind, wobei an jedem Ausleger wenigstens ein Bodenbearbeitungswerkzeug aufgehängt ist, das in Arbeitsstellung seitlich neben dem Fahrgestell auf dem Boden liegt und in Transportstellung wenigstens bereichsweise liegend auf dem Fahrgestell angeordnet ist.

In der Landwirtschaft sind technische Hilfsmittel, insbesondere zur Bodenbearbeitung, geläufig. Die hierbei verwendeten Geräte bestehen häufig aus zwei oder mehreren Geräteteilen, die in aller Regel mit Hilfe einer Zugmaschine über den zu bearbeitenden Boden gezogen werden. In aller Regel besteht das Gerät dabei entweder aus Walzen unterschiedlicher Gestalt, aus Eggen oder anderen Bearbeitungswerkzeugen an sich bekannter Art. Dabei sind Geräte gebräuchlich, die insbesondere aus drei Teilen bestehen, einem Mittelteil sowie zwei äußeren Teilen, die beim Transport zum oder vom Feld bzw. Acker in eine Transportlage gebracht werden.

Ein gattungsgemäßes Bodenbearbeitungsgerät ist aus DE 87 12 640 U1 bekannt. Bei diesem Gerät sind die Ausleger beiderseits des Fahrgestells hintereinander angeordnet und mittels jeweils einer Schwenkeinrichtung, die eine zur Fahrtrichtung parallele Schwenkachse aufweist, so in Transportstellung schwenkbar, daß jedes am Ausleger aufgehängte Werkzeug quer zur Fahrtrichtung liegend auf dem Fahrgestell angeordnet ist. Diese Konstruktion bietet den Vorteil, daß aufgrund der liegenden Anordnung der Ausleger und der entsprechenden Werkzeuge in der Transportstellung der Schwerpunkt des Bodenbearbeitungsgerätes relativ niedrig liegt, so daß die Fahrsicherheit recht gut ist und relativ hohe Fahrgeschwindigkeiten zuläßt.

Von Nachteil bei dem bekannten Gerät ist jedoch, daß in Arbeitsstellung die Ausleger und damit die entsprechenden Werkzeuge nicht in einer gemeinsamen vertikalen Ebene liegen, sondern vielmehr hintereinander angeordnet sind. Dies führt dazu, daß insbesondere bei häufig vorkommenden unebenen Bodenflächen bei der Bearbeitung kein ruhiger Lauf des Arbeitsgerätes gewährleistet ist. Darüber hinaus ist bei Kurvenfahrten keine einwandfreie Bearbeitung möglich, da es einerseits zu Überdeckungen und andererseits zwangsläufig zu Auslassungen von zu bearbeitender Bodenfläche kommt.

Aus der DE 35 35 683 A1 ist ein Bodenbearbeitungsgerät bekannt geworden, das diesen Nachteil zwar vermeidet, da die Ausleger und damit die entsprechenden Bodenbearbeitungswerkzeuge in Arbeitsstellung in einer gemeinsamen vertikalen Ebene liegen, von Nachteil bei dieser bekannten Ausführungsform ist jedoch, daß in Transportstellung die Ausleger etwa senkrecht angeordnet sind. Neben der großen Höhe des Bodenbearbeitungsgerätes in Transportstellung ist diese Ausführung insbesondere deshalb nachteilig, da der Schwerpunkt des Bodenbearbeitungsgerätes in Transportstellung sehr hoch liegt, wodurch die Fahrstabilität relativ schlecht ist und nur geringe Fahrgeschwindigkeiten zuläßt.

Aufgabe der Erfindung ist es deshalb, ein derartiges Bodenbearbeitungsgerät so zu verbessern, daß es in Transportstellung gute Fahreigenschaften aufweist und gleichzeitig in Arbeitsstellung eine einwandfreie Bodenbearbeitung ermöglicht.

Diese Aufgabe wird mit einem Bodenbearbeitungsgerät der eingangs bezeichneten Art erfindungsgemäß dadurch gelöst, daß die horizontale Schwenkachse jedes Auslegers schräg zur Fahrtrichtung angeordnet ist, derart, daß die Drehachsen der Werkzeuge in Arbeitsstellung im wesentlichen auf einer gemeinsamen Geraden liegen und in Transportstellung die Ausleger etwa parallel nebeneinander auf dem Fahrgestell angeordnet sind.

Mit dem erfindungsgemäßen Bodenbearbeitungsgerät wird eine Lösung zur Verfügung gestellt, die sowohl in Transport- als auch in Arbeitsposition die gewünschten Anforderungen voll erfüllt. Durch die winklige Anordnung der schwenkbaren Ausleger am Fahrgestell, d.h. die Ausgestaltung der entsprechenden Schwenkeinrichtungen, ist es möglich, sowohl die Ausleger mit den entsprechenden Werkzeugen in Transportposition flach liegend auf dem Fahrgestell anzuordnen, wodurch ein entsprechend niedriger Schwerpunkt und damit gute Fahreigenschaften gewährleistet werden, als auch in Arbeitsposition die Ausleger bzw. die betreffenden Werkzeuge in einer gemeinsamen Vertikalebene anzuordnen, derart, daß eine einwandfreie Bodenbearbeitung möglich ist, da es bei Kurvenfahrten nicht zu Überdeckungen bzw. Auslassungen kommen kann. Außerdem ist das Bodenbearbeitungsgerät sehr kompakt und weist nur eine kurze Transportlänge auf, was ein Ankoppeln weiterer Bearbeitungsgeräte erleichtert.

Als besonders vorteilhaft hat es sich herausgestellt, daß die beiden Schwenkachsen parallel angeordnet sind und der jeweilige Winkel der Schwenkachsen zur Fahrtrichtung zwischen 5^{o} und 15^{o} beträgt, wobei ein Winkel von 10^{o} ganz besonders vorteilhaft ist.

In vorteilhafter Weiterbildung der Erfindung ist vorgesehen, daß der die beiden Schwenkeinrichtungen für die Ausleger tragende Fahrgestellaufbau parallelogrammförmig ausgebildet ist, wobei die Seitenträger entsprechend schräg zur Fahrtrichtung angeordnet sind. Dabei sind die Schwenkeinrichtungen an den Seitenträgern angeordnet, während die Querträger des Fahrgestells quer zur Fahrtrichtung angeordnet sind. Selbstverständlich ist aber auch eine andere Ausbildung des Fahrgestells möglich.

Besonders vorteilhaft ist es, wenn das die Räder tragende Fahrwerk längsverschiebbar am Fahrgestell angeordnet ist. Durch diese Ausgestaltung ist es insbesondere beim Anbau bzw. Ankoppeln weiterer Nachbearbeitungsgeräte und in Abhängigkeit vom Winkel der Schwenkachsen und der Größe der Ausleger möglich, auf einfache Weise die Anhängestützlast bzw. den Schwerpunkt des Bodenbearbeitungsgerätes genau einzustellen, um einen fahrsicheren Zug erstellen zu können.

Es ist zweckmäßig, wenn die Schwenkeinrichtungen ein Hydraulikgetriebe aufweisen. Selbstverständlich sind aber auch andere Getriebearten möglich, z.B. Zahnradgetriebe oder Stangengetriebe oder dgl.

Als besonders vorteilhaft hat es sich herausgestellt, wenn jede Schwenkeinrichtung mit einem Vierpunktgestänge ausgerüstet ist. Es ist dann nur ein einziger Hydraulikzylinder je Seite erforderlich, um die Schwenkbewegung von der Transport- in die Arbeitsposition und zurück für den betreffenden Ausleger durchzuführen.

Die Erfindung ist nachstehend anhand der Zeichnung beispielsweise näher erläutert. Diese zeigt jeweils in vereinfachter Darstellung in:
- Fig. 1: ein erfindungsgemäßes Bodenbearbeitungsgerät in einer Rückansicht in Arbeitsstellung,
- Fig. 2: das Gerät nach Fig. 1 in einer Draufsicht,

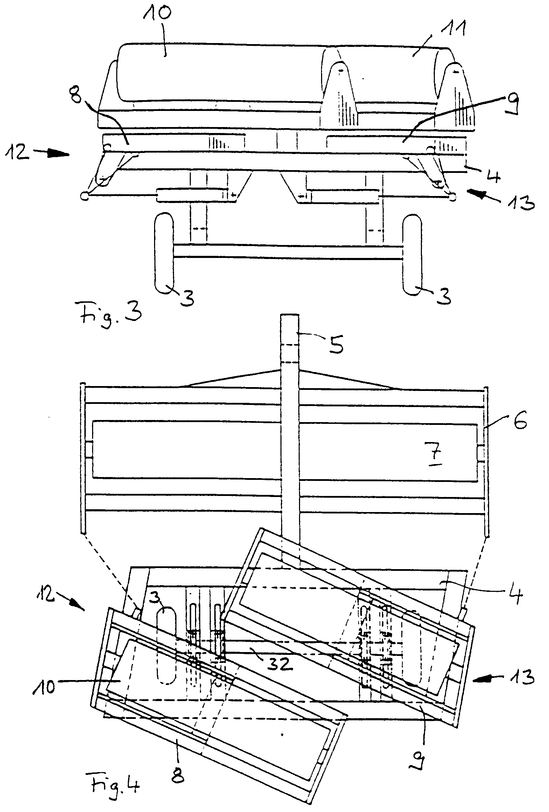

- Fig. 3: ein erfindungsgemäßes Bodenbearbeitungsgerät in einer Rückansicht in Transportstellung,
- Fig. 4: das Gerät nach Fig. 3 in einer Draufsicht,
- Fig. 5: eine Seitenansicht des Gerätes nach Fig. 3 und 4,
- Fig. 6: eine Seitenansicht des Gerätes nach Fig. 1 und 2,
- Fig. 7: eine Schwenkeinrichtung für einen Ausleger des Bodenbearbeitungsgerätes in einer Rückansicht in Arbeitsstellung und
- Fig. 8: die Schwenkeinrichtung in Transportstellung.

Ein erfindungsgemäßes Bodenbearbeitungsgerät ist in der Zeichnung allgemein mit 1 bezeichnet. Dieses Bodenbearbeitungsgerät 1 weist ein Fahrgestell 2 mit Laufrädern 3 auf, wobei in bekannter Weise das Fahrgestell 2 mit einem rahmenförmigen Fahrgestellaufbau 4 verbunden ist.

An diesem Fahrgestellaufbau 4 ist eine Deichsel 5 angeordnet, deren vorderes freies Ende zum Ankoppeln an eine nicht dargestellte Zugmaschine ausgebildet ist. Mit der Deichsel 5 ist eine Rahmenkonstruktion 6 verbunden, in welcher drehbar ein Hauptbodenbearbeitungswerkzeug 7, im dargestellten Beispiel eine Walze, aufgehängt ist.

Beiderseits des rahmenförmigen Fahrgestellaufbaus 4 ist jeweils schwenkbar ein Ausleger 8,9 angeordnet, wobei an jedem Ausleger 8,9 wenigstens ein Bodenbearbeitungswerkzeug 10,11 drehbar aufgehängt ist, diese Werkzeuge sind im Ausführungsbeispiel als Walzen dargestellt. Für die schwenkbare Anordnung der Ausleger 8 und 9 am Fahrgestellaufbau 4 sind allgemein mit 12 und 13 bezeichnete Schwenkeinrichtungen vorgesehen. Dabei ist für die Erfindung wesentlich, daß die horizontalen Schwenkachsen 14,15 der Schwenkeinrichtungen 12,13, die vorzugsweise parallel sind, schräg zur Fahrtrichtung angeordnet sind, wobei die Fahrtrichtung parallel zur Deichsel 5 durch einen Pfeil 16 angedeutet ist. Der Winkel zwischen den Schwenkachsen 14,15 und der Fahrtrichtung 16 beträgt dabei vorzugsweise 5 bis 15, insbesondere 10^{o}.

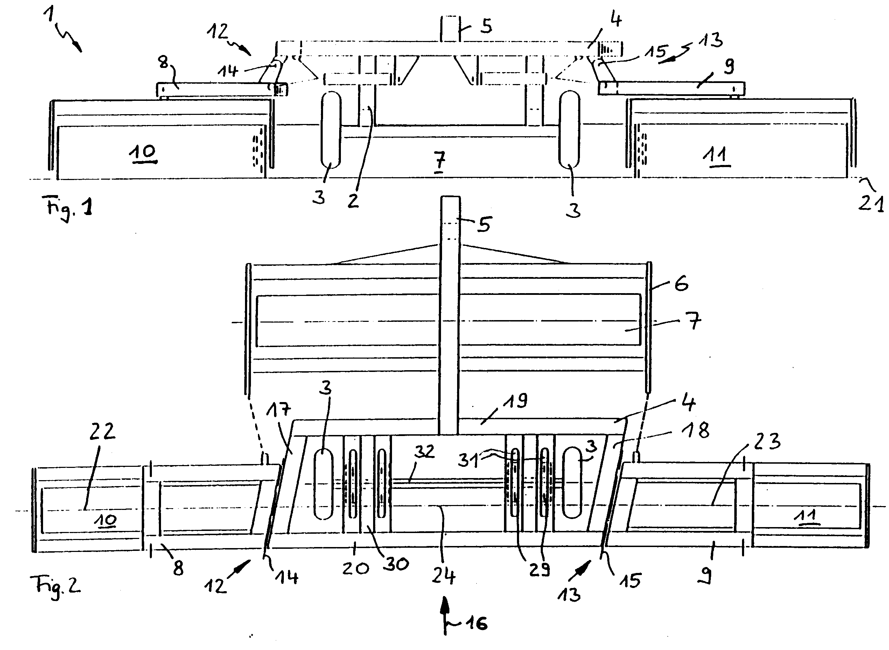

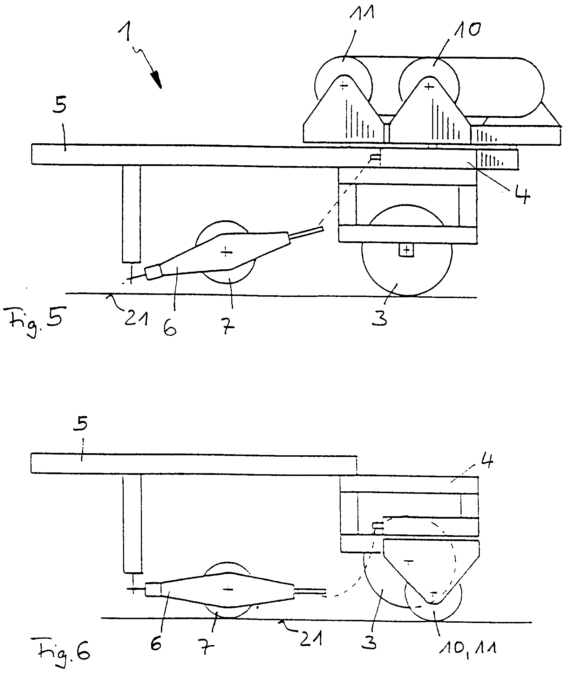

Besonders vorteilhaft ist es im übrigen, so wie dies in den Fig. 1 und 4 dargestellt ist, wenn die die Schwenkeinrichtungen 12 und 13 tragenden Seitenträger 17 und 18 des Fahrgestellaufbaus 4 parallel zu den Schwenkachsen 14 und 15 angeordnet sind, während die Querträger 19 und 20 des Fahrgestellaufbaus 4 quer zur Fahrtrichtung 16 angeordnet sind, derart, daß der rahmenförmige Fahrgestellaufbau 4 parallelogrammförmig ausgebildet ist.

Durch die Anordnung der Schwenkeinrichtungen 12,13 mit der zur Fahrtrichtung 16 schrägen Ausrichtung der Schwenkachsen 14 und 15 ist es möglich, daß sich in Arbeitsposition, in welchem sich die Werkzeuge 10 und 11 der Ausleger 8 und 9 auf der zu bearbeitenden Bodenfläche 21 befinden, die mit 22 und 23 angedeuteten Drehachsen der Werkzeuge 10 und 11 auf einer gemeinsamen Geraden 24 liegen, derart, daß in Arbeitsstellung die Werkzeuge 10 und 11 in einer gemeinsamen Vertikalebene liegen, so daß auch bei Kurvenfahrten eine einwandfreie Bodenbearbeitung möglich ist, ohne daß es zu Überdeckungen bzw. Auslassungen von Bodenflächen kommt.

Gleichzeitig ist es durch die Anordnung der Schwenkeinrichtungen 12,13 möglich, so wie dies am besten aus Fig. 4 erkennbar ist, daß in Transportstellung die Ausleger 8,9 liegend etwa parallel nebeneinander auf dem Fahrgestell bzw. dem Fahrgestellaufbau 4 angeordnet sind, so daß das Bodengerät 1 stabile Fahreigenschaften aufweist, da der Schwerpunkt in Transportposition sehr niedrig angeordnet ist.

Um auch beim Ankoppeln weiterer Nachbearbeitungsgeräte einen stabilen Zug zu erhalten, ist zusätzlich, wie in Fig. 2 und 4 dargestellt, vorgesehen, daß das die Laufräder 3 tragende Fahrwerk 29 längsverschiebbar am Fahrgestell 2 angeordnet ist. Dazu weisen Längsträger 30 des Fahrgestells 2 geeignete Führungen 31 auf, in denen das die Achse 32 der Laufräder 3 lagernde Fahrwerk 29 verschiebbar angeordnet ist, wobei dann jeweils eine Befestigung in einer bestimmten Längsposition erfolgt.

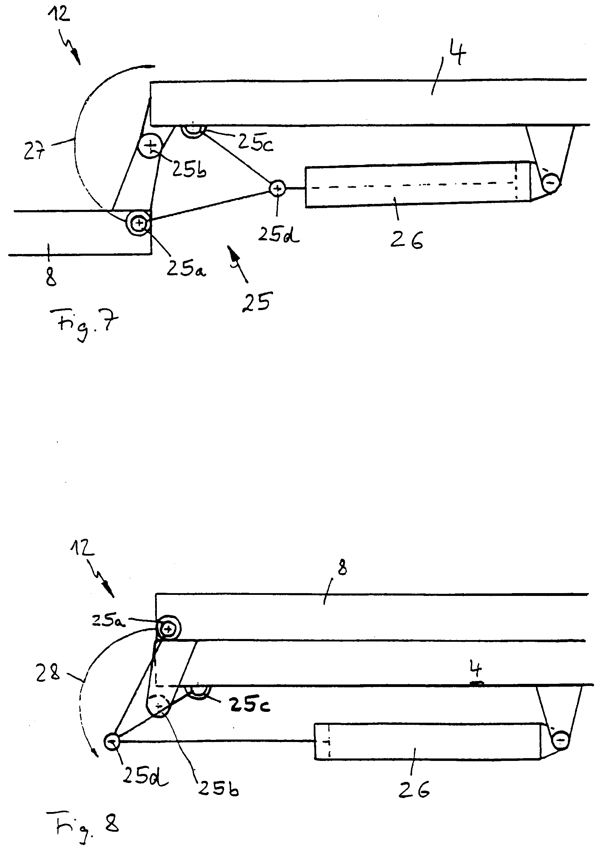

In den Fig. 5 und 6 ist darüber hinaus noch dargestellt, was für sich betrachtet bekannt ist, mittels einer geeigneten Ausbildung der Rahmenkonstruktion 6 des Hauptbodenwerkzeuges 7 das Hauptbodenwerkzeug 7 in Transportposition (Fig. 5) nach oben vom Boden 21 anzuheben, derart, daß nur die Laufräder 3 auf der Bodenfläche 21 aufliegen, während in Fig. 6 das Hauptbodenbearbeitungswerkzeug 7 auf die Bodenfläche 21 abgesenkt ist, genauso wie die Bodenbearbeitungswerkzeuge 10,11. In dieser Position sind die Laufräder 3 nicht mit der Bodenfläche 21 in Berührung.

In Fig. 7 und 8 ist eine besonders vorteilhafte Ausgestaltung der Schwenkeinrichtungen 12,13 dargestellt, wobei der Einfachheit halber nur die Ausbildung der Schwenkeinrichtung 12 gezeigt ist, die andere Schwenkeinrichtung 13 ist entsprechend aufgebaut. Dabei zeigt Fig. 7 die Lage der Schwenkeinrichtung 12 in Arbeitsstellung, Fig. 8 diejenige in Transportstellung. Wie erkennbar, weist die Schwenkeinrichtung 12 ein Vierpunktgestänge 25 auf, die einzelnen Gelenkpunkte sind dabei mit 25a,25b,25c und 25d bezeichnet. Dabei ist der Gelenkpunkt 25d mit der Kolbenstange eines Hydraulikzylinders 26 verbunden, der seinerseits am anderen Ende am Fahrgestellaufbau 4 angelenkt ist. Erkennbar ist es aufgrund dieser Ausbildung durch die Betätigung nur eines Hydraulikzylinders 26 möglich, den betreffenden Ausleger 8 von der Arbeitsposition in die Transportposition (Pfeil 27) bzw. umgekehrt (Pfeil 28) zu befördern. Selbstverständlich könnte die Schwenkeinrichtung 12 aber auch anders ausgebildet sein, hier wäre beispielsweise ein Zahnradgetriebe möglich.

Natürlich ist die Erfindung nicht auf die dargestellten Ausführungsbeispiele beschränkt. Weitere Ausgestaltungen der Erfindung sind möglich, ohne den Grundgedanken zu verlassen. Wesentlich ist jedoch, daß die Schwenkeinrichtungen 12,13 so angeordnet sind, daß die Werkzeuge 10,11 der Ausleger 8,9 in Arbeitsposition in einer gemeinsamen Vertikalebene und in Transportposition etwa parallel nebeneinander auf dem Fahrgestell liegen.

## Patentansprüche

1. Bodenbearbeitungsgerät mit einem Fahrgestell mit Rädern, mit zwei Auslegern, die aus einer Arbeitsstellung, in der sie seitlich vom Fahrgestell wegragen, in eine Transportstellung schwenkbar sind, wobei an jedem Ausleger wenigstens ein Bodenbearbeitungswerkzeug aufgehängt ist, das in Arbeitsstellung seitlich neben dem Fahrgestell auf dem Boden liegt und in Transportstellung wenigstens bereichsweise liegend auf dem Fahrgestell angeordnet ist,
dadurch gekennzeichnet,
daß die horizontale Schwenkachse (14,15) jedes Auslegers (8,9) schräg zur Fahrtrichtung (16) angeordnet ist, derart, daß die Drehachsen (22,23) der Werkzeuge (10,11) in Arbeitsstellung im wesentlichen auf einer gemeinsamen Geraden (24) liegen und in Transportstellung die Ausleger (8,9) etwa parallel nebeneinander auf dem Fahrgestell (2) angeordnet sind.

2. Bodenbearbeitungsgerät nach Anspruch 1,
dadurch gekennzeichnet,
daß die beiden Schwenkachsen (14,15) parallel angeordnet sind und der jeweilige Winkel der Schwenkachse (14,15) zur Fahrtrichtung (16) zwischen 5^{o} und 15^{o} beträgt.

3. Bodenbearbeitungsgerät nach Anspruch 1 oder 2,
dadurch gekennzeichnet,
daß der die beiden Schwenkeinrichtungen (12,13) für die Ausleger (8,9) tragende Fahrgestellaufbau (4) parallelogrammförmig ausgebildet ist, wobei die Seitenträger (17,18) entsprechend schräg zur Fahrtrichtung (16) angeordnet sind.

4. Bodenbearbeitungsgerät nach Anspruch 1 oder einem der folgenden,
dadurch gekennzeichnet,
daß das die Räder (3) tragende Fahrwerk (29) längsverschiebbar am Fahrgestell (2) angeordnet ist.

5. Bodenbearbeitungsgerät nach Anspruch 1 oder einem der folgenden,
dadurch gekennzeichnet,
daß die Schwenkeinrichtungen (12,13) ein Hydraulikgetriebe (26) aufweisen.

6. Bodenbearbeitungsgerät nach Anspruch 5,
dadurch gekennzeichnet,
daß jede Schwenkeinrichtung (12,13) mit einem Vierpunktgestänge (25) ausgerüstet ist.
